# EUROPÄISCHE PATENTANMELDUNG

(11) **EP 1 323 810 A1**
(43) Veröffentlichungstag der Anmeldung: **02.07.2003**
(21) Anmeldenummer: 01129266.1
(22) Anmeldetag: 12.12.2001
(51) Int. Cl.: C10J 3/50

(54) **Doppelrohrvergaser**

(71) Anmelder: von Görtz & Finger Techn. Entwicklungs Ges.m.b.H., 36110 Schlitz (DE)
(72) Erfinder: Graf von Görtz, Rüdiger, 36110 Schlitz (DE); Finger, Ulrich, 87647 Oberthingau (DE)

(57) **Zusammenfassung**

Die Erfindung stellt einen völlig neuen Typ eines Vergasers dar, der kontinuierlich mit Material beschickt wird, das in einem innenliegendem Heissgasrohr mittels einer Spirale mechanisch transportiert wird und auf diesem Weg entfeuchtet, entgast und in der Pyrolyse zu Holzgas umgewandelt wird. Das Restmaterial wird ausgesiebt zum Vergasungsmaterial wieder zurückgeführt. Eine Förderschnecke mit Industriekoks ist für die Feinreinigung angeschlossen.

Die gesamte Einheit ist auf einem Grundrahmen moniert und stellt eine kompakte Strom + Wärme - Koppelungsanlage insbesondere für Biomasse da.

## Beschreibung

Zahlreiche Versuche mit unterschiedlichen Vergasertypen haben gezeigt, dass sowohl bei der Materialzuführung als auch wie bei dem Materialtransport Störungen auftreten können. Diese Störungen haben unterschiedliche Ursachen, aber im einzelnen sind es bei Feststoffvergasern, der sogenannte Hohlbrand, der verhindert, dass Material nachrutschen kann. Bei Wendelrohrvergasern ergibt sich eine Störung dadurch, dass Material in der vibrierenden Rohrschlange liegen bleibt und bei Wirbelschichtvergasern kann es durch zu geringem Druck im Düsenboden auch zu Ablagerungen kommen.

Aus diesen Gesichtspunkten wurde ein neuer Vergasertyp entwickelt, der sogenannte Doppelrohrvergaser. Der im einzelnen wie folgt funktioniert:

Der Doppelrohrvergaser besteht aus einem Aussenrohr **1** und einem innenliegenden Heissgasrohr **2**. In das innenliegende Heissgasrohr wird von oben das Vergasungsmaterial zugeführt **3**, das dann durch eine angetriebene Spirale **4** auf dem waagerechten Weg bis zum Endes des Rohres **5** transportiert wird. Der Antrieb besteht aus einem handverstellbaren stufenlosen Getriebe, so dass die Transportgeschwindigkeit des Materials eingestellt werden kann **6**. Das innenliegende Heissgasrohr ist kürzer als das Aussenrohr, so dass das bereits vergasende Restmaterial am Endes des Heißgasrohres in das Aussenrohr fällt **7**.

Unterhalb von dem Heissgasrohr befindet sich eine Transportschnecke **8**, die das bereits zu Holzkohle umgewandelte Füllmaterial wieder zum Ausgangspunkt zurück transportiert **9**.

Das Heissgasrohr wird an der Stirnseite mittels eines Zündbrenners **10** auf Temperaturen bis 1000 Grad erhitzt. Die Strahlungshitze des Heissgassrohres wirkt auch nach unten auf das Material das von der Transportschnecke zum Ausgang transportiert wird. Dadurch wird erreicht, dass eine ausreichenden Nachvergasung stattfindet.

Am Ende der unteren Schnecke wird das noch nicht ganz vergaste Restmaterial mit der Asche ausgetragen. Mittels einer Siebkorbschnecke wird die Asche von dem Restmaterial getrennt. Das Restmaterial wandert zurück in den Bevorratungsbehälter **11** und wird mit den darin befindlichen Füllmaterial vermischt.

Das erzeugte Holzgas wird in eine Industriekoksschnecke **12** geleitet, in der es im Gegenstromverfahren abgekühlt und gereinigt wird. Am Ende der Industriekoksschnecke befindet sich eine Gasregelstrecke **13**, die den Druck soweit reduziert, dass der Gasmotor **14** mit dem Holzgas beschickt werden kann.

Sobald der Doppelrohrvergaser ein zündfähiges Gas liefert, wird der Zündbrenner zum Stützbrenner und mit Holzgas versorgt. Dieser Stützbrenner arbeitet mit geringem Sauerstoffüberschuss, so dass der bei der Verbrennung nicht ganz verbrauchte Sauerstoff dazu benutzt wird, die schnell flüchtigen Gase zu entzünden und damit zusätzliche Prozesswärme zu erzeugen.

Die Abwärme des BHKW's wird dazu benutzt in einer Wärmetauscher-Doppelrohrschnecke **15** das Vergasungsmaterial vorzuwärmen um bereits eine gewisse Entfeuchtung des Materials zu erreichen. Nach Verlassen der Materialschnecke haben die Abgase noch soviel Wärmeenergie, um damit über einen Wärmetauscher Brauchwasser zu erzeugen **16.**

Mittels einer Doppelkolbenschleuse **17** wird wechselseitig vorgewärmtes Vergasungsmaterial **18** und erhitzter, mit Teeren beladener Industriekoks **19** dem Doppelrohrvergaser zugeführt. Das Verhältnis Materialmenge zu Koksmenge ist abhängig von der Belastung des zu vergasenden Materials. Der vorgewärmte und mit Teerpartikeln belastete Industriekoks dient im Wendelrohrvergaser gleichzeitig auch dazu, die Prozesswärme im Heissgasrohr zu erhöhen. Der Industriekoks wird der Koksschnecke mittels eines Trichters **20** mit darunter liegender Zellenradschleuse intervallmassig zugeführt.

Die besonderen Vorteile dieses Doppelrohrvergasers sind:
1) das gesamte Material wird mechanisch weiterbewegt, so dass es zu keinen Verstopfungen, Hohlbränden oder Ablagerungen kommen kann.
2) das je nach Grösse und Feuchtigkeit des Materials, die Transportgeschwindigkeit im Doppelrohrvergaser angepasst werden kann.
3) dass nicht vergastes Restmaterial in Form von Holzkohle, dem Ausgangsmaterial wieder zugegeben wird, wodurch ein hoher Wirkungsgrad erreicht wird.
4) dass der für die Abkühlung und Reinigung des Holzgases benötigte Industriekoks, zu 100 % wiederverwertet wird.
5) dass die Abwärme des BHKW's zum Teil dafür verwendet wird, das zu vergasende Material vorzuwärmen.
6) durch die schlanke lange Bauart, ist es möglich diesen Doppelrohrvergaser als Module nebeneinander zu bauen, um eine leistungsbezogene Holzgasproduktion zu erhalten.
7) durch Öffnen der Blindflansche an den Enden des Dopplerohrvergasers, ist eine schnelle und einfache Wartung des Vergasers möglich.

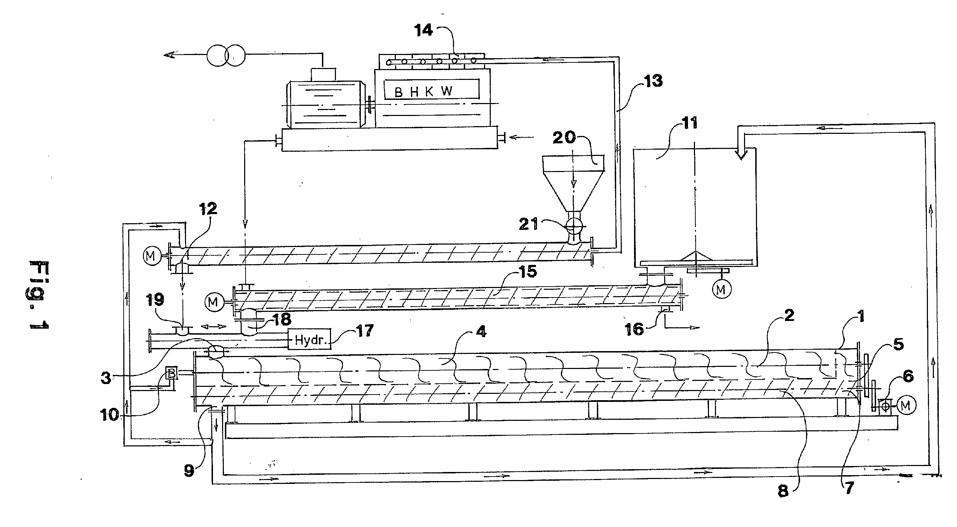

## Patentansprüche

1. Verfahren zur Erzeugung eines teerfreien, kalten Synthesegases sind **dadurch gekennzeichnet, dass** kontinuierlich Vergasungsmaterial mit einer waagerechten Doppelschleuse zugeführt wird.

2. Verfahren nach Anspruch 1) **dadurch gekennzeichnet, dass** das Vergasungsmaterial durch ein Heissgasrohr mittels einer mechanisch angetriebenen Spirale transportiert wird und in dem Aussenrohr vorvergast.

3. Verfahren nach Anspruch 2) **dadurch gekennzeichnet, dass** das zu vergasende Material mit Hilfe eines stufenlos verstellbaren Getriebes im Vorschub der Stückgrösse und des Feuchtigkeitgehaltes angepasst werden kann.

4. Verfahren nach Anspruch 3) **dadurch gekennzeichnet, dass** am Ende des Vergasungsrohres das nicht vollständig vergaste Material zum Aufgabebehälter wieder zurückgeführt wird.

5. Verfahren nach Anspruch 4) **dadurch gekennzeichnet, dass** das Holzgas in einer nachgeschalteten Industriekoksschnecke abgekühlt und von Teeren gereinigt wird.

6. Verfahren nach Anspruch 5) **dadurch gekennzeichnet, dass** der beladene Industriekoks automatisch durch neuen Industriekoks ersetzt werden kann und dass der gesättigte Industriekoks dem Vergasungsmaterial und mir vergast wird.

7. Verfahren nach Anspruch 6) **dadurch gekennzeichnet, dass** die Abgaswärme des BHKW dazu benutzt wird, dass das Vergasungsmaterial vorgewärmt und dadurch vorgetrocknet wird.

8. Verfahren nach Anspruch 7 ) **dadurch gekennzeichnet, dass** durch das Öffnen der Blindflansche der gesamte Doppelrohrvergaser zerlegt werden kann.
